## Europäisches Patentamt
## European Patent Office
## Office européen des brevets

(19)

(11) Veröffentlichungsnummer: **0 100 868 B1**

(12) **EUROPÄISCHE PATENTSCHRIFT**

(45) Veröffentlichungstag der Patentschrift:
02.04.86

(51) Int. Cl.⁴: **B 29 D 23/00**

(21) Anmeldenummer: 83106595.8

(22) Anmeldetag: 06.07.83

(54) Vorrichtung zum Herstellen von schlauchförmigen Vorformlingen aus Kunststoff.

(30) Priorität: 08.07.82 DE 3225567

(43) Veröffentlichungstag der Anmeldung:
22.02.84 Patentblatt 84/8

(45) Bekanntmachung des Hinweises auf die Patenterteilung:
02.04.86 Patentblatt 86/14

(84) Benannte Vertragsstaaten:
DE FR GB IT

(56) Entgegenhaltungen:
AT - B - 335 725
DE - A - 1 800 263

(73) Patentinhaber: Mehnert, Johannes, Ernststrasse 11,
D-5205 Sankt Augustin 3 (DE)
Patentinhaber: Staehle Maschinenbau GmbH,
Dieselstrasse 25, D-7022 Leinfelden-Echterdingen (DE)

(72) Erfinder: Mehnert, Johannes, Ernststrasse 11,
D-5205 Sankt Augustin 3 (DE)
Erfinder: Effenberger, Alfred, Finkenstrasse 13,
D-7024 Filderstadt 4 (DE)

(74) Vertreter: Gross, Reinhold, Dr. Dipl.-Phys. et al, Am
Seerosenteich 3, D-5210 Troisdorf (DE)

**Beschreibung**

Die vorliegende Erfindung bezieht sich auf eine Vorrichtung zum Herstellen von schlauchförmigen Vorformlingen nach dem Oberbegriff des Anspruchs 1.

Eine solche Vorrichtung ist durch die AT-A-335725 bekannt. Weiterhin zeigt die DE-A-1800263 eine Vorrichtungsvariante, bei der auch dann keine restlos befriedigende Arbeitsweise erzielt werden kann, wenn in der Kunststoffkammer in an sich bekannter Weise eine axial verschiebbare Plastifizier- und Förderschnecke vorgesehen ist, die beim Vorschub der die Düse bildenden Büchse in der Kunststoffkammer vorgeschoben wird, um eine genügende Kontinuität des Kunststoffflusses zu erzielen. Aber auch dann ist die Dickensteuerung des schlauchförmigen Vorformlings nicht befriedigend. Das gilt insbesondere dann, wenn der Vorformling eine besondere Dickenverteilung in seiner Längserstreckung aufweisen soll, um sich an verschiedene örtliche Verformungsanforderungen während eines nachfolgenden Blasvorganges anpassen zu können. Ausserdem hat dieses System den Nachteil, dass für das Verschieben der Förderschnecke in der Schneckenkammer ein grosser maschinentechnischer Aufwand erforderlich ist. Eine feine Regelung der Volumenänderung ist nicht möglich, da schon eine geringe Verschiebung der Förderschnecke eine relativ grosse Volumenänderung bewirkt.

Ausserdem hat man schon versucht, durch Einführen eines Plungers in die Kunststoffkammer den Druck auf den Kunststoff innerhalb der Kunststoffkammer zu vergrössern, um damit eine Dickensteuerung herbeizuführen. Es hat sich aber in der Praxis gezeigt, dass hierdurch gleichfalls eine hohen Ansprüchen genügende Dickensteuerung nicht genau genug erzielt werden kann. Das Strömungsbild des Kunststoffes in einer solchen Kunststoffkammer ist zudem nicht homogen, was die Arbeitsweise und die Qualität der Vorformlinge beeinträchtigt. Beim Tauchblasverfahren ist es notwendig, eine solche Kunststoffkammer ziemlich lang auszubilden, um von vorn dem Dorn und von hinten dem Plunger genügend Raum zu geben. Dies führt zu grossen Abmessungen der Kunststoffkammer und damit zu langer Verweilzeit des Kunststoffes in der Kammer, was bei thermisch empfindlichen Kunststoffen sehr nachteilig ist. Weiterhin wird bei dieser bekannten Vorrichtung der plastische Kunststoff seitlich in einen Ringkanal eingespeist, wobei der dem Zuführkanal gegenüberliegende Bereich dieses Ringkanales einen sehr langsamen Materialfluss bzw. tote Ecken aufweist, was eine zusätzliche Beeinträchtigung des Strömungsbildes und des Verhaltens wärmeempfindlicher Kunststoffe bewirkt.

Die Erfindung hat sich die Aufgabe gestellt, die Strömungsverhältnisse zu verbessern und gleichzeitig die Verweilzeit des Kunststoffes in der Kammer zu verkürzen.

Diese Aufgabe wird durch die Merkmale des Anspruchs 1 gelöst.

Weitere bevorzugte Ausführungen sind in den Ansprüchen 2 bis 13 beschrieben.

Es versteht sich von selber, dass die beschriebenen Vorrichtungen nur Ausführungsbeispiele erfassen.

Der Vorteil der vorliegenden Erfindung liegt darin, dass die Formänderung der Kunststoffkammer eine besonders exakte Steuerung der extrudierten Kunststoffmenge des schlauchförmigen Vorformlings gestattet.

Eine bevorzugte Ausführung der Erfindung sieht vor, dass die Kunststoffkammer mit einer auswechselbaren Austrittsdüse an ihrem vorderen Ende auf Holmen ausserhalb des Einflussbereiches der Verarbeitungswärme des Kunststoffes geführt und mit ihrem hinteren Ende auf dem mit der Schneckenkammer fest verbundenen Einspeisungsrohr für den Kunststoff verschiebbar ist, wobei durch die zentrale Zuführung des Kunststoffes in die Kunststoffkammer die günstigen Strömungsverhältnisse noch verbessert werden.

Ausführungsbeispiele der Erfindung sind in den nachstehenden Zeichnungen veranschaulicht.

Fig. 1 bis 5 stellen fünf verschiedene Verfahrensphasen bei einer erfindungsgemässen Ausführungsform dar.

Fig. 6 und 7 zeigen verschiedene Ausführungsvarianten der Erfindung.

Fig. 8 zeigt das Schema einer Maschine in der Ausführungsform entsprechend den Fig. 1 bis 5.

Fig. 9 veranschaulicht eine weitere Ausführungsform der Erfindung.

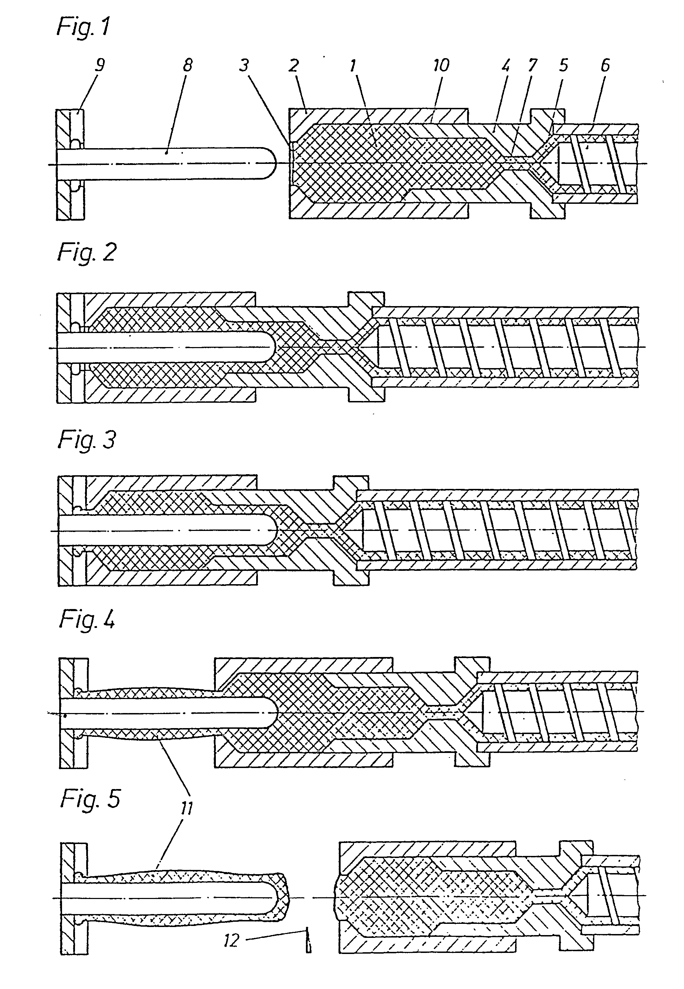

In den Fig. 1 bis 5 ist die Kunststoffkammer mit der Bezugsziffer 1 bezeichnet. Die Kunststoffkammer 1 wird in ihrer geometrischen Form gebildet durch die vordere Büchse 2, welche am Austrittsende der Kammer eine Düse 3 aufweist, und eine hintere Büchse 4, welche mit der Schneckenkammer 5 fest verbunden ist. Die Schneckenkammer 5, in welcher sich die Schnecke 6 befindet, ist über einen Kanal 7 mit der Kunststoffkammer 1 verbunden. Der Dorn 8 steht bei der Ausführungsform gemäss den Fig. 1 bis 5 fest. Er ist an einem Mündungswerkzeug 9 befestigt, welches zum Anformen eines Gewindes oder dergleichen dient. Bei dieser Ausführungsform gibt es zwischen der vorderen Büchse 2 und der hinteren feststehenden Büchse 4 nur einen einzigen Schiebesitz 10. Die dargestellten Positionen gehen natürlich fliessend ineinander über. Im Interesse der Übersichtlichkeit sind die Antriebselemente nicht gezeichnet.

In Fig. 1 ist die Kammer 1 mit Kunststoff gefüllt und nimmt so eine Bereitschaftsstellung ein.

In Fig. 2 haben sich die vordere Büchse 2 und die hintere Büchse 4 in gleicher Richtung, jedoch mit unterschiedlichen Hüben bewegt. Damit wurde das Volumen der Kammer 1 vergrössert und der Dorn 8 in den Kunststoff eingetaucht, ohne dass Kunststoff an der Düse 3 austritt, bevor sie am Mündungswerkzeug 9 anliegt.

In Fig. 3 hat die hintere Büchse 4 noch einen gewissen Hub in Richtung des Dornes 8 ausgeführt, womit sich die Kammer 1 verkleinert hat und der Kunststoff das Mündungswerkzeug 9 voll ausfüllt. Dieses Anspritzen kann auch durch Extrusion erfolgen, oder auch durch Kombination von Extrusion und entsprechendem Hub der hinteren Büchse 4. Danach führt die hintere Büchse 4 noch einen kleinen Hub zurück aus, um den zuvor in der Kammer 1 auf den Kunststoff aufgebrachten Druck zu entlasten. Dieser Hub dient auch dem Volumenausgleich in der Kammer 1 im Falle weiter aus der Schneckenkammer 5 erfolgter (kontinuierlicher) Extrusion.

In Fig. 4 haben sich die vordere Büchse 2 und die hintere Büchse 4 gleichzeitig, aber mit unterschiedlichen Hüben zurückbewegt. Die Bewegungen beider Elemente erfolgen koordiniert miteinander und nach regelbarem Programm, so dass der Vorformling 11 auf dem Dorn 8 in einer genau bestimmten Wanddicke gebildet wird.

In Fig. 5 hat die vordere Büchse 2 den Dorn 8 über seiner Länge passiert, und der Vorformling 11 ist von dem ihn mit der Düse 3 verbindenden Vollstrang getrennt. Die Trennung kann durch das Messer 12 erfolgen oder durch weiteres gleichzeitiges Zurückfahren von vorderer Büchse 2 und hinterer Büchse 4, wodurch sich der Kunststoffstrang einschnürt und abreisst.

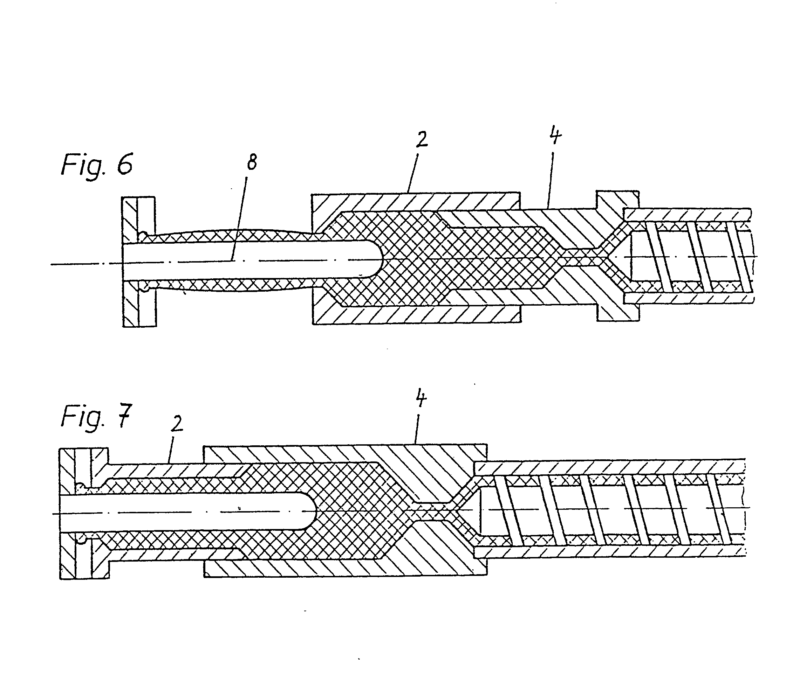

Die Fig. 6 zeigt zwei Varianten der in den Fig. 1 bis 5 beschriebenen Arbeitsweisen. Die eine ist eine Vorrichtung, bei der die hintere Büchse 4 ortsfest ist und in Verbindung mit dem beweglichen Dorn 8 die vordere Büchse 2 bewegt wird.

Die andere Variante ist eine Vorrichtung, bei der die vordere Büchse 2 ortsfest ist und in Verbindung mit dem beweglichen Dorn 8 die hintere Büchse 4 bewegt wird. Im übrigen sind beide Arbeitsweisen analog zu den in den Fig. 1 bis 5 beschriebenen Phasen.

Die Fig. 7 zeigt ein Ausführungsbeispiel, bei dem sich die vordere Büchse 2 nicht über, sondern in der hinteren Büchse 4 befindet.

Die Büchsen 2 und 4 sind in der Praxis einfache Drehteile und leicht auswechselbar. Die vordere Büchse 2 wie auch die hintere Büchse 4 können im übrigen den geometrischen Wünschen gemäss sehr unterschiedlich gestaltet werden, z.B. für bestimmte Durchmesserverhältnisse und Hübe, wie auch beeinflusst von der Art des Kunststoffes und den Dimensionen der herzustellenden Vorformlinge.

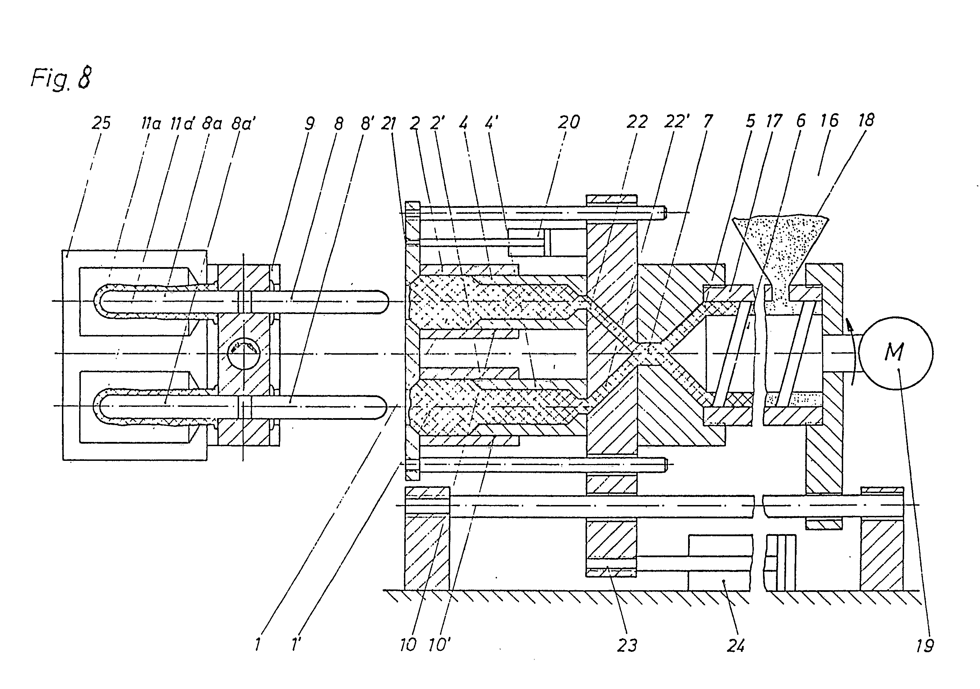

In Fig. 8 wird schematisch eine Maschine mit ihren wichtigsten Teilen gezeigt. Der Extruder 16 weist wie üblich einen Zylinder 17 und eine Schnecke 6 auf, deren Freiraum eine Kammer 5 bildet, in der über den Trichter 18 Kunststoff aufgenommen wird, um in der Kammer 5 plastifiziert und gefördert zu werden, wozu der Motor 19 die Schnecke 6 dreht.

Die Kammern 1 bzw. 1' sind in ihrem Volumen veränderlich durch Relativbewegung der vorderen Büchsen 2 bzw. 2' und der hinteren Büchsen 4 bzw. 4', die miteinander die Schiebesitze 10 bzw. 10' bilden. Ein Linearantrieb 20, der mit den hinteren Büchsen 4 bzw. 4' fest verbunden ist, sitzt mit seinem beweglichen Kolben in einer Aufnahme 21 in den vorderen Büchsen 2 bzw. 2', so dass sich die Büchsen 2 bzw. 2' und 4 bzw. 4' gegeneinander verschieben lassen, wodurch deren Kammervolumen stetig veränderlich ist.

Die hinteren Büchsen 4 bzw. 4' sind mit dem Extruder 16 über dessen Zylinder 17 fest verbunden. Die Kammern 1 bzw. 1' haben Verengungen, die als Zweigkanäle 22 bzw. 22' und Kanal 7 direkt zum Schneckenraum 5 führen. Dabei wird bei der veranschaulichten Maschine sichergestellt, dass bei allen Kunststoffkammern der Kunststoff zentral und ungehindert in die Kammern eintreten kann.

Mit den hinteren Büchsen 4 bzw. 4' fest verbunden befindet sich eine Aufnahme 23 für den Kolben eines Linearantriebes 24, der mit seinem Zylinder ortsfest gelagert ist. Hiermit können die hinteren Büchsen 4 bzw. 4' samt dem Schneckenraum 5 und diesen umgebenden Teilen in Richtung der Blasdorne 8 bzw. 8' bewegt werden, so dass die Düsen 3 bzw. 3' an dem Halswerkzeug 9 anliegen. Die Wirkungsweise ist schematisch in den die Verfahrensschritte darstellenden Fig. 1 bis 5 erläutert.

Eine Maschine kann Ausrüstungen erhalten für eine oder mehrere Kavitäten. Hier ist eine Doppelanordnung gezeigt. Das Blaswerkzeug 25 hat entsprechend zwei Kavitäten, und in diesen können die Vorformlinge durch Einleiten von Luft durch die Blasdorne zu Hohlkörpern aufgeweitet werden. Zum Entformen nach der Auskühlung des fertigen Hohlkörpers wird das Blaswerkzeug 25 geöffnet.

Nicht dargestellt sind die für die Blasformung zwar notwendigen, aber selbstverständlichen Einzelheiten, wie z.B. die Luftzuführung für die Blasdorne, die dafür erforderlichen Kanäle, die Bohrungen und Schlitze für den Luftaustritt, die Dornhalterung, die Temperierbohrungen der Mündungswerkzeuge, die Kühlbohrungen der Blasform, ferner die Beheizung der Düsen, des Verteilers und des Schneckenzylinders.

Die fertigen Hohlkörper können nach Öffnen der Blasform in der Blasposition oder, während die Dorne zurückschwenken, abgezogen werden. Bei weiteren nicht dargestellten Ausführungen nimmt der Dornträger drei oder vier Satz Dorne auf, wobei die weiteren Positionen der Entnahme, dem Temperieren der Vorformlinge oder der Zwischenhohlkörper sowie dem Verstrecken zur Verfügung stehen.

Die maschinelle Anordnung ist bevorzugt waagerecht gemäss Fig. 8, wobei die Dorne sich in einer senkrechten Ebene bewegen. Damit liegen alle den Prozess ausführenden Elemente gleich weit von der Bedienungsseite entfernt. Bei kleineren Maschinen ist eine platzsparende Aufstellung in senkrechter Hauptachse möglich, während bei grossen Maschinen eine nach dem Extruder abgewinkelte Anordnung zweckmässig ist.

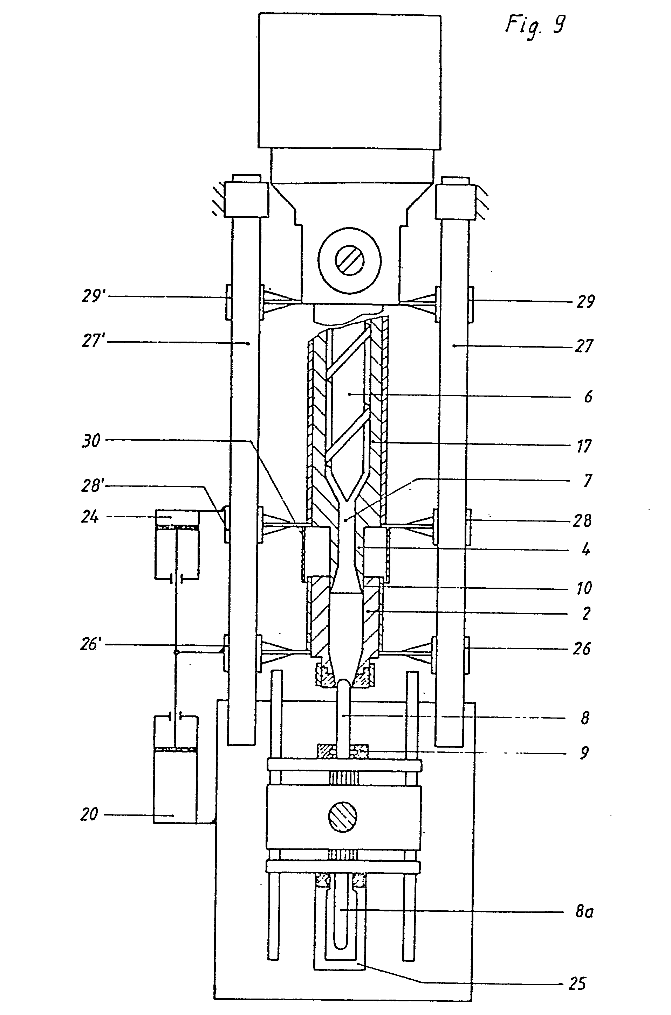

In der Fig. 9 ist eine Variante dargestellt, in der die verschiebbaren Elemente eine gemeinsame Führung aufweisen. Die gegeneinander verschiebbaren Büchsen 2 und 4 haben Führungselemente 26, 26' und 28, 28', die ausserhalb des thermischen Einflussbereiches liegen.

Bei dieser Anordnung verhindert der Abstand zwischen den Büchsen 2 und 4 und den Führungselementen 26, 26' und 28, 28' eine Beeinträchtigung dieser Führung durch die an den Büchsen 2 und 4 herrschende Wärme.

Für die axiale Relativbewegung der verschiedenen Elemente, Büchsen 2 und 4 und Schneckenkammer 17, kommt einer koaxialen Führung eine besondere Bedeutung zu. Diese Aufgabe wird dadurch gelöst, dass die zugehörigen Führungselemente 26, 26', 28, 28' und 29, 29' sich koaxial auf gemeinsamen Führungen 27, 27' bewegen. Besonders geeignet für eine solche gemeinsame Führung sind die in der Fig. 9 dargestellten, parallel angeordneten Holme 27 und 27'. Bei ausgefahrenem Hub der relativ zueinander beweglichen Büchsen 2 und 4 wird das dabei freiwerdende Teleskop von einem Wärmeschutzschild 30 gegen unerwünschte Wärmeabstrahlung abgeschirmt.

### Patentansprüche

1. Vorrichtung zum Herstellen von schlauchförmigen Vorformlingen aus Kunststoff, die eine Kunststoffkammer aufweist, welche mit einer Austrittsdüse (3) versehen ist, durch die ein Blasdorn (8) in eine mit plastischem Kunststoff gefüllte Kammer einführbar und unter Mitnahme von ihn umgebendem Kunststoff aus der Austrittsdüse herausführbar ist, wobei ein Kanal (7) in der Wandung der Kunststoffkammer vorgesehen ist, durch den Kunststoff aus einer von der Kunststoffkammer getrennt ausgebildeten Schneckenkammer (5) in die Kunststoffkammer förderbar ist, und wobei das geometrische Volumen der Kunststoffkammer durch Verschiebung von Wandungsteilen dieser Kammer veränderbar ist, dadurch gekennzeichnet, dass die Kunststoffkammer (1) aus mindestens zwei teleskopartig ineinander verschieblichen koaxialen Büchsen (2, 4) besteht, von denen die vordere Büchse (2) an einem Ende eine die Austrittsdüse (3) bildende Verengung aufweist, während am Ende der hinteren Büchse (4) der Kanal (7) zur zentralen Zuführung des Kunststoffes in die Kunststoffkammer (1) vorgesehen ist.

2. Vorrichtung nach Anspruch 1, dadurch gekennzeichnet, dass die Kunststoffkammer aus zwei Büchsen (2, 4) besteht, von denen die hintere Büchse fest mit dem Gehäuse der schneckenkammer (5) verbunden ist.

3. Vorrichtung nach Anspruch 1 oder 2, dadurch gekennzeichnet, dass die Geschwindigkeit der Verschiebung der Büchsen zueinander einstellbar ist, wobei bei einer gewünschten Veränderung der Dicke des Vorformlings (11) im Zuge seiner Bildung der Antrieb der hinteren Büchse (4) in bezug auf die vordere Büchse (2) so eingestellt ist, dass der Geschwindigkeitsverlauf des teleskopartigen Zusammenschiebens der Büchsen (2, 4) dem angestrebten Dickenverlauf des schlauchförmigen Vorformlings (11) entspricht.

4. Vorrichtung nach einem der Ansprüche 1 bis 3, dadurch gekennzeichnet, dass zusätzlich zu einer Relativbewegung der die Kunststoffkammer begrenzenden Büchsen (2, 4) eine Gesamtbewegung der aus Kunststoffkammer und Schneckenkammer gebildeten Einheit gegenüber dem Dorn (8) erfolgt.

5. Vorrichtung nach Anspruch 1, dadurch gekennzeichnet, dass der Übergang von der Schneckenkammer (5) in die Kunststoffkammer (1) mittels eines um 90° abgebogenen Rohres erfolgt.

6. Vorrichtung nach einem der Ansprüche 1 bis 5, dadurch gekennzeichnet, dass die hintere Büchse (4) auf oder in einer Führung gleitend gelagert ist, die den Verbindungskanal (7) zur Schneckenkammer (5) enthält.

7. Vorrichtung nach einem der Ansprüche 1 bis 6, dadurch gekennzeichnet, dass zur Erzielung einer erheblichen radialen Veränderung der radialen Abmessungen der Kunststoffkammer die Dicke der hinteren Büchse (4) relativ gross gegenüber der der vorderen Büchse (2) ist.

8. Vorrichtung nach einem der Ansprüche 1 bis 7, dadurch gekennzeichnet, dass zur Erzielung der relativen axialen Teleskopbewegungen der Büchsen ein hydraulischer Antrieb vorgesehen ist.

9. Vorrichtung nach einem der Ansprüche 1 bis 8, dadurch gekennzeichnet, dass mindestens eine der Büchsen (2, 4) geführt ist.

10. Vorrichtung nach den Ansprüchen 1 bis 9, dadurch gekennzeichnet, dass sich die Führungen (26, 26'; 28, 28') der Büchsen (2, 4) ausserhalb des thermischen Einflussbereiches der Büchsen (2, 4) befinden.

11. Vorrichtung nach den Ansprüchen 1 bis 10, dadurch gekennzeichnet, dass die Büchsen (2, 4) mit ihren Führungselementen (26, 26'; 28, 28') und die Schneckenkammer (17) mit ihren Führungselementen (29, 29') eine gemeinsame Führung haben.

12. Vorrichtung nach den Ansprüchen 1 bis 11, dadurch gekennzeichnet, dass die gemeinsame Führung aus vorzugsweise zwei parallel angeordneten Holmen (27, 27') besteht.

13. Vorrichtung nach den Ansprüchen 1 bis 12, dadurch gekennzeichnet, dass das Teleskop der relativ zueinander beweglichen Büchsen (2, 4) von einem Wärmeschutzschild (30) abgeschirmt ist.

### Claims

1. A device for manufacturing tubular preforms of synthetic resin, which comprises a synthetic resin chamber provided with a discharge nozzle (3) through which a mandrel (8) is adapted to be introduced into a chamber filled with plastic synthetic resin and to be extracted therefrom whilst entraining synthetic resin surrounding it, a passageway (7) being provided in the wall of the resin chamber through which resin can be delivered into the resin chamber from a worm chamber (5) constructed separately from the resin chamber, the geometrical volume of the resin chamber being variable by displacement of wall portions of said chamber, characterised in that the synthetic resin chamber (1) consists of at least two telescopically slidable coaxial sleeves (2, 4) of which the forward sleeve (2) at one end has a constriction forming the discharge nozzle (3), whilst at the end of the rear sleeve (4) there is provided the passageway (7) for feeding the synthetic resin centrally into the resin chamber (1).

2. A device according to Claim 1, characterised in that the resin chamber consists of two sleeves (2, 4) whereof the rear sleeve is fixedly connected to the housing of the worm chamber (5).

3. A device according to Claim 1 or 2, characterised in that the speed of relative sliding displacement of the sleeves is adjustable, the arrangement being such that, for a desired variation of thickness of the preform (11) during the course of its formation, the drive of the rear sleeve (4) in relation to the front sleeve (2) is so adjusted that the speed curve of the telescopic contraction of the sleeves (2, 4) corresponds to the desired thickness curve of the tubular preform (11).

4. A device according to any of Claims 1 to 3, characterised in that, additionally to a relative movement of the sleeves (2, 4) defining the resin chamber, there is a total displacement of the unit comprising the resin chamber and worm chamber relative to the mandrel (8).

5. A device according to Claim 1, characterised in that the transition from the worm chamber (5) to the resin chamber (1) is made by means of a 90° angled tube.

6. A device according to any of Claims 1 to 5, characterised in that the rear sleeve (4) is slidably supported on or in guide means which contain the communicating passage (7) to the worm chamber (5).

7. A device according to any of Claims 1 to 6, characterised in that for achievement of a considerable radial variation of the radial dimensions of the resin chamber the thickness of the rear sleeve (4) is comparatively large relative to the front sleeve (2).

8. A device according to any of Claims 1 to 7, characterised in that for achievement of the relative axial telescopic movement of the sleeves an hydraulic drive is provided.

9. A device according to any of Claims 1 to 8, characterised in that at least one of the sleeves (2, 4) is positively guided.

10. A device according to Claims 1 to 9, characterised in that the guide means (26, 26'; 28, 28') for the sleeves (2, 4) are arranged outside the range of thermal influence of the sleeves (2, 4).

11. A device according to Claims 1 to 10, characterised in that the sleeves (2, 4) with their guide elements (26, 26'; 28, 28') and the worm chamber (17) with its guide elements (29, 29') have a common guideway.

12. A device according to Claims 1 to 11, characterised in that the common guideway consists of preferably two mutually parallel bars (27, 27').

13. A device according to Claims 1 to 12, characterised in that the telescope of the relatively movable sleeves (2, 4) is screened by a heat protector shield (30).

## Revendications

1. Dispositif pour la fabrication de préformes tubulaires en matière synthétique présentant une chambre à matière synthétique munie d'une buse de sortie (3), à travers laquelle un mandrin de soufflage (8) peut être introduit dans une chambre remplie de matière synthétique plastique et en être retiré en emportant la matière synthétique qui l'entoure, un conduit (7) étant prévu dans la paroi de la chambre à matière synthétique à travers lequel la matière synthétique peut être transférée à partir d'une chambre à vis sans fin (5), réalisée séparément de la chambre à matière synthétique, jusqu'à cette dernière, le volume géométrique de la chambre à matière synthétique pouvant être modifié par déplacement d'éléments de la paroi de cette chambre, caractérisé en ce que la chambre à matière synthétique (1) est constituée d'au moins deux manchons (2, 4), le manchon antérieur (2) présentant à une extrémité un rétrécissement formant la buse de sortie (3), tandis qu'à l'extrémité du manchon postérieur (4) est prévu le conduit (7) permettant l'alimentation centrale en matière synthétique de la chambre à matière synthétique (1).

2. Dispositif selon la revendication 1, caractérisé en ce que la chambre à matière synthétique est constituée de deux manchons (2, 4) dont le manchon postérieur est relié solidement à l'enceinte de la chambre à vis sans fin (5).

3. Dispositif selon l'une des revendications 1 ou 2, caractérisé en ce que la vitesse relative de déplacement des manchons est réglable et, pour un changement souhaité d'épaisseur de la préforme (11) en cours de formation, la commande d'entraînement du manchon postérieur (4) est réglée par rapport au manchon antérieur (2) de manière que la variation de la vitesse de l'emboîtement télescopique des manchons (2, 4) corresponde à la variation souhaitée de l'épaisseur de la préforme tubulaire (11).

4. Dispositif selon l'une des revendications 1 à 3, caractérisé en ce que, en plus du mouvement relatif des manchons (2, 4) délimitant la chambre de matière synthétique, on réalise un mouvement d'ensemble de l'unité comprenant les chambres à matière synthétique et à vis sans fin, par rapport au mandrin (8).

5. Dispositif selon la revendication 1, caractérisé en ce qu'un tuyau coudé à 90° assure le passage de la chambre à vis sans fin (5) vers la chambre à matière synthétique.

6. Dispositif selon l'une des revendications 1 à 5, caractérisé en ce que le manchon postérieur (4) est monté de façon coulissante sur ou dans un guide qui contient le conduit de raccordement (7) vers la chambre à vis sans fin (5).

7. Dispositif selon l'une des revendications 1 à 6, caractérisé en ce que, dans le but d'obtenir une variation radiale importante des dimensions radiales de la chambre à matière synthétique, l'épaisseur du manchon postérieur (4) est relativement plus importante que celle du manchon antérieur (2).

8. Dispositif selon l'une des revendications 1 à 7, caractérisé en ce qu'un entraînement hydraulique est prévu pour assurer les déplacements télescopiques axiaux relatifs des manchons.

9. Dispositif selon l'une des revendications 1 à 8, caractérisé en ce qu'au moins l'un des manchons (2, 4) est guidé.

10. Dispositif selon les revendications 1 à 9, caractérisé en ce que les guides (26, 26'; 28, 28') des manchons (2, 4) sont situés en dehors de la zone d'influence thermique des manchons (2, 4).

11. Dispositif selon les revendications 1 à 10, caractérisé en ce que les manchons (2, 4) avec leurs éléments de guidage (26, 26'; 28, 28') et la chambre à vis sans fin (7) avec ses éléments de guidage (29, 29') présentent un organe de guidage commun.

12. Dispositif selon les revendications 1 à 11, caractérisé en ce que l'organe de guidage commun est constitué de deux longerons (27, 27') de préférence parallèles.

13. Dispositif selon les revendications 1 à 12, caractérisé en ce que le montage télescopique des deux manchons (2, 4) à déplacement relatif est protégé par un écran de protection thermique (30).

0 100 868

Fig. 1

Fig. 2

Fig. 3

Fig. 4

Fig. 5

*Fig. 6*

*Fig. 7*

Fig. 8

*Fig. 9*

29' — 29

27' — 27

— 6

30 — 17

28' — 7

24 — 28

— 4

— 10

— 2

26' — 26

— 8

— 9

20 —

— 8a

— 25